Europäisches Patentamt

European Patent Office

Office européen des brevets

(19)

(11) Numéro de publication: **0 145 822**
**B1**

(12) **FASCICULE DE BREVET EUROPEEN**

(45) Date de publication du fascicule du brevet: **18.05.88**

(21) Numéro de dépôt: **83402454.9**

(22) Date de dépôt: **19.12.83**

(51) Int. Cl.⁴: **F 26 B 7/00,** C 04 B 33/30, H 05 B 6/78

(54) **Procédé et installation pour le séchage de produits humides, en particulier de mélanges à base d'argile.**

(43) Date de publication de la demande:
**26.06.85 Bulletin 85/26**

(45) Mention de la délivrance du brevet:
**18.05.88 Bulletin 88/20**

(84) Etats contractants désignés:
**AT BE CH DE FR GB IT LI LU NL SE**

(56) Documents cités:
**FR-A- 912 895**
**FR-A-2 304 045**
**US-A-3 953 703**

(73) Titulaire: **COMPAGNIE FRANCAISE DES MICRO-RAYONNEMENTS, Société Anonyme française:**
**77 Allée de Brienne**
**F-31000 Toulouse (FR)**

(72) Inventeur: **Secail, Jean**
**Château d'Empeaux**
**F-31470 Saint Lys (FR)**

(74) Mandataire: **Tony-Durand, Serge**
**Cabinet Tony-Durand 77, rue Boissière**
**F-75116 Paris (FR)**

Courier Press, Leamington Spa, England.

## Description

L'invention concerne un procédé et une installation pour le séchage de produits humides; elle s'applique en particulier mais non exclusivement pour sécher des mélanges à base d'argiles se présentant soit sous la forme de produits façonnés, soit à l'état de masses brutes.

Un type de procédé de séchage très couramment mis en oeuvre pour sécher des produits ou masses humides consiste à déplacer ces produits dans des tunnels de séchage, qui sont parcourus par de l'air chaud à contre-courant du sens d'avancement des matières.

Cette ventilation à contre-courant a pour but essentiel d'éviter le "croûtage" des produits en surface; ce phénomène qui se produit si l'on soumet les produits brutalement à un flux chaud et sec, a pour grave conséquence, d'une part, d'empécher un séchage homogène et complet des produits (en faisant obstacle à la migration de l'eau du coeur vers la surface des produits et en emprisonnant cette eau à l'intérieur desdits produits), d'autre par, de provoquer des fissures et cassures des produits en surface en raison de l'élévation brusque de la tension de vapeur d'eau au voisinage de la surface croûtée.

Dans le séchage à contre-courant, l'air chaud et sec se refroidit et se charge progressivement d'humidité en remontant les produits de sorte que ces derniers sont soumis à une action d'échauffement et de dessication progressive évitant le croûtage. Ce type de séchage à contre-courant constitue actuellement sur le plan industriel de meilleur compromis entre la recherche d'une évacuation aussi économique que possible de l'eau contenue dans les produits et la necessité de supprimer les phénomènes de croûtage qui font obstacle à cette évacuation.

Toutefois, ces procédés à contre-courant requièrent des durées de séchage très élevées, de l'ordre de quelques heures à quelques dizaines d'heures; une réduction des durées de séchage est extrêmement difficile à obtenir en pratique dans ce type de technique, car elle entraîne des risques de croûtage et surtout accroît très fortement les consommations énergétiques. Par exemple, à l'heure actuelle, les procédés à contre-courant les plus performants mis en oeuvre pour sécher des carreaux constitués par des mélanges à base d'argile en vue de l'obtention de carreaux en céramique, exigent des durées au moins égales à 1,5 heure à 2 heures et conditionnent des consommations énergétiques supérieures à 3 000 kcal par kg d'eau enlevée.

Ces limitations de performances proviennent de la très faible efficacité du flux à contre-courant: en effet, le long du parcours des produits, le taux d'humidité et la température, d'une part des produits, d'autre par du flux d'air varient dans le même sens de sorte que le gradient hygrométrique et le gradient de température demeurent toujours relativement faibles tout le long du tunnel de séchage.

A titre d'exemple d'un procédé de ce genre, on peut faire référence à celui décrit dans le FR—A—2.304.045 où le produit humide à sécher est soumis successivement à des flux de gaz chauds à températures différentes.

De même et selon un autre procédé, on connaît par exemple par le FR—A—912895, un procédé de séchage utilisant un courant à haute fréquence, avec ventilation simultanée puis subséquente au moyen de flux gazeux chauds. Mais de tels procédés où deux phases de séchage distinctes sont effectuées consécutivement présentent des rendements médiocres et nécissitent une consommation d'enérgie prohibitive.

La présente invention vise un procédé de séchage perfectionné et se propose d'améliorer notablement le bilan énergétique des procédés de séchage sus-évoqués et d'en réduire considérablement les durées, tout en écartant les risques de croûtage en surface des produits à sécher.

Un autre objectif de l'invention est de fournir une installation de séchage permettant de mettre en oeuvre ledit procédé avec une grande souplesse d'adaptation à l'application envisagée.

A cet effet, le procédé de séchage conforme à l'invention consiste à soumettre successivement les produits humides à sécher aux phases successives de traitement suivantes:

(a) exposer les produits à un rayonnement électromagnétique hyperfréquence et, simultanément, les ventiler au moyen d'un flux gazeux chaud et non saturé,

(b) ventiler ensuite lesdits produits au moyen d'un flux gazeux chaud et non saturé, de température moyenne inférieure à celle du flux de la phase (a),

(c) ventiler ensuite lesdits produits au moyen d'un flux gazeux chaud et non saturé, de température moyenne supérieure à celle du flux de la phase (b) et d'hygrométrie inférieure à celle dudit flux,

(d) exposer ensuite les produits à un rayonnement électromagnétique hyperfréquence et, simultanément, les ventiler au moyen d'un flux gazeux chaud et non saturé, de température moyenne supérieure à celle du flux de la phase (a) et d'hygrométrie inférieure à celle dudit flux,

(e) ventiler ensuite lesdits produits au moyen d'un flux gazeux chaud et non saturé, de température moyenne supérieure à celle du flux de la phase (d) et d'hygrométrie inférieure à celle dudit flux.

Par "hygromètrie" d'un flux gazeux, on entend le rapport de la pression effective de la vapeur d'eau contenue dans ce flux, à la valeur de la pression maximale de vapeur saturante dans les mêmes conditions de température.

Selon les applications, les phases (d) et (e) peuvent être renouvelées, une ou plusieurs fois, les produits étant alors soumis, après la phase (e) précitée, au moins une fois à des phases (d') et (e') identiques aux phases (d) et (e).

Les effets essentiels obtenus au cours de la phase (a) par combinaison du rayonnement et de la ventillation consistent, d'un part, en une forte migration de l'eau depuis le coeur des produits vers leur surface, d'autre par en une mise en température progressive des produits intérieurement et en surface, enfin en un amorçage de l'évaporation en surface. La forte migration d'eau vers la surface et l'échauffement aussi bien en surface qu'au coeur des produits, supprime tout risque de croûtage.

La phase (b) consiste en une ventilation par un air moins chaud, qui provoque une évaporation efficace de l'eau ayant migré vers la surface durant la phase précédente; cette phase n'engendre aucun risque de croûtage du fait de la température plus douce du flux d'air et de la migration rémanente qui subsiste à l'intérieur des produits après la fin de la phase précédente. A la fin de cette phase (b), les produits sont en température et les risques de croûtage et de fissuration sont beaucoup plus faibles.

La phase (c) profite de cette moindre propension au croûtage et à la fissuration pour arracher une fraction supplémentaire de l'eau avec un air sensiblement plus chaud et plus sec que celui de la phase précédente. Ainsi les ventilations des phases (a), (b) et (c) permettent d'utiliser au mieux l'effet du rayonnement de la phase (a) sans provoquer de phénomènes de croûtage ou fissurations.

La phase (d), qui comporte une nouvelle irradiation, engendre une nouvelle migration de l'eau du coeur vers la surface des produits; cette nouvelle irradiation évite un abaissement de l'efficacité du séchage, comme ce serait le cas si celui-ci était poursuivi uniquement au moyen d'air chaud.

La phase (e) provoque une évaporation de l'eau ayant migré à la phase précédente ou en cours de migration par effet de rémanence.

En case de renouvellement ultérieur des phases (d) et (e), les phénomènes se reproduisent de façon analogue à ceux ci-dessus décrits, les produits étant ainsi séchés au terme de la dernière phase (e') jusqu'au degré souhaité.

Ainsi, la combinaison des phases (a), (b), (c), (d), (e) et le cas échéant (d') et (e'), qui conjuguent des irradiations hyperfréquences et des ventilations spécifiques, permet de réaliser un séchage homogène extrêmement efficace avec des consommations énergétiques modérées et des durées beaucoup plus faibles que dans les procédés classiques à contre-courant (quelques minutes à quelques dizaines de minutes) et ce, sans risque de fissuration pour les produits.

Les conditions de mise en oeuvre des phases précitées sont préférentiellement les suivantes, notamment dans le case de produits constitués par les mélanges à base d'argile:

(a) pendant un laps de temps compris entre 1 et 10 min, exposer les produits à un rayonnement électromagnétique hyperfréquence tel que la densité de puissance moyenne au niveau des produits soit comprise entre 0,2 et 5 watt/cm$^3$, et, simultanément, ventiler lesdits produits au moyen d'un flux gazeux chaud, de température comprise entre 90°C et 50°C et d'hygrométrie comprise entre 10% et 50%,

(b) pendant un laps de temps compris entre 1 et 10 min, ventiler lesdits produits au moyen d'un flux gazeux chaud de température comprise entre 80°C et 40°C et d'hygrométrie comprise entre 15% et 60%,

(c) pendant un laps de temps compris entre 1,5 et 15 min, ventiler lesdits produits au moyen d'un flux gazeux chaud de température comprise entre 40°C et 110°C et d'hygrométrie comprise entre 50% et 10%,

(d) pendant un laps de temps compris entre 1 min et 10 min, exposer les produits à un rayonnement électromagnétique hyperfréquence tel que la densité de puissance moyenne au niveau des produits soit comprise entre 0,2 et 5 watt/cm$^3$ et, simultanément, ventiler lesdits produits au moyen d'un flux gazeux chaud, de température comprise entre 80°C et 130°C et d'hygrométrie comprise entre 15% et 5%,

(e) pendant un laps de temps compris entre 2,5 min et 25 min, ventiler lesdits produits au moyen d'un flux gazeux chaud de température comprise entre 110°C et 150°C et d'hygrométrie inférieure à 10%.

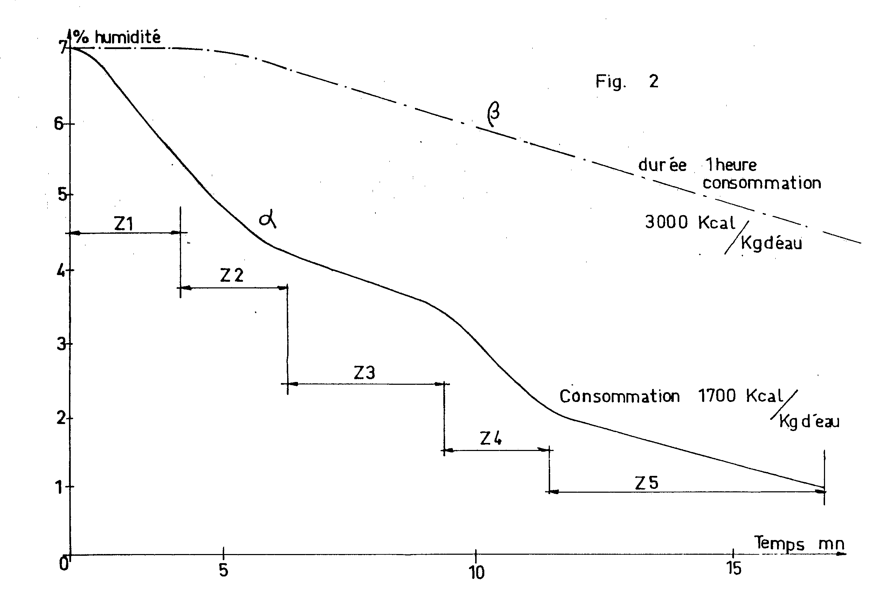

La figure 2, qui sera commentée plus loin, illustre à titre comparatif, d'une part, un diagramme α de séchage selon le procédé de l'invention mis en oeuvre dans les conditions ci-dessus définies, d'autre part, un diagramme β de séchage selon un procédé à contre-courant. On peut se rendre compte que, pour obtenir le même état final, le procédé de l'invention entraîne une consommation énergétique globale à peu près moitié de celle du procédé classique à contre-courant et exige un temps de l'ordre de 4 fois moins important que le procédé classique à contre-courant. Une telle performance est extrêmement importante en pratique puisque, à production égale, elle permet de prévoir des installations moins coûteses, qui s'amortissent beaucoup plus rapidement.

Le procédé conforme à l'invention est très avantageusement mis en oeuvre selon le mode suivant:

. au cours des phases successives (a) et (b), les produits sont déplacés à co-courant dans un premier flux gazeux de ventilation présentant des conditions initiales correspondant à celles de la phase (a), le déplacement à co-courant des produits étant effectué de sorte que, après s'être chargé en humidité et avoir perdu des calories, ledit premier flux gazeux se retrouve dans des conditions finales correspondant à celles de la phase (b),

. au cours des phases suivantes (c), (d) et (e), éventuellement (d'), (e'), les produits sont déplacés à contre-courant dans un second flux gazeux de ventilation présentant des conditions initiales correspondant à celles de la dernière phase (e) ou (e'), le déplacement à contre-courant des produits étant effectué de sorte que, après s'être chargé en humidité et avoir perdu des calories, ledit second flux gazeux se retrouve dans des conditions intermédiaires correspondant à celles de la phase (d) et dans des conditions finales correspondant à celles de la phase (c).

Ce mode de mise en oeuvre dans lequel le premier flux de ventilation peut être obtenu par dérivation d'une fraction du second flux, permet d'améliorer le bilan énergétique du procédé, tout en réduisant le coût des équipements nécessaires (en particulier en raison de la présence d'un seul générateur d'air chaud).

L'invention s'étend à une installation de séchage de produits humides, en vue de la mise en oeuvre du procédé défini précédemment.

L'installation visée par l'invention est du type comprenant un tunnel délimitant une cavité intérieure pour le passage des produits entre une entrée et une sortie, un conveyeur adapté pour transporter les produits le long dudit tunnel depuis son entrée jusqu'à sa sortie et des moyens de génération d'air chaud sec; selon la présente invention, ladite installation comprend:

. une gaine de soufflage d'air chaud dite gaine de soufflage principal, débouchant dans la cavité du tunnel au voisinage de sa sortie,

. une gaine de soufflage d'air chaud dite gaine de soufflage secondaire, débouchant dans la cavité du tunnel au voisinage de son entrée,

. une gaine d'extraction d'air, débouchant dans la cavité en un point intermédiaire de la longueur de cette dernière, de façon à séparer celle-ci en un tronçon amont de co-courant et un tronçon aval de contre-courant,

. un premier générateur d'ondes hyperfréquence, agencé pour irradier le tronçon de co-courant sur une fraction amont de sa longueur située au voisinage de l'entrée, de façon à délimiter deux zones successives le long dudit tronçon de co-courant: une zone amont, irradiée et ventilée $(Z_1)$ voisine de l'entrée, et une zone aval ventilée $(Z_2)$ voisine de la gaine d'extraction,

. au moins un second générateur d'ondes hyperfréquence, agencé pour irradier le tronçon de contre-courant sur une fraction intermédiaire de sa longueur, de façon à délimiter au moins trois zones successives le long dudit tronçon de contre-courant: une zone amont ventilée $(Z_3)$ voisine de la gaine d'extraction, au moins une zone intermédiaire irradiée et ventilée $(Z_4)$ et au moins une zone aval ventilée $(Z_5)$.

La forme du tunnel depuis son entrée jusqu'à sa sortie peut être diverse: tunnel rectiligne, tunnel à plusieurs tronçons accolés juxtaposés sur un même niveau, tunnel à plusieurs tronçons accolés superposés sur des niveaux différents, tunnel en forme de boucle située dans un plan vertical ou horizontal. Le conveyeur peut être de tout type connu, en particulier conveyeur à tapis sans fin ou conveyeur à balancelles.

D'autres caractéristiques, buts et avantages de l'invention se dégageront de la description qui suit en regard des dessins annexés, qui en présentent à titre non limitatif des exemples de réalisation; sur ces dessins qui font partie intégrante de la présente description:—

la figure 1 est une vue schématique, illustrant un premier mode de réalisation d'installation conforme à l'invention

la figure 2 est un diagramme de séchage montrant, d'une part, une courbe α de séchage obtenue par mise en oeuvre du procédé au moyen de l'installation précitée, d'autre part, une courbe β de séchage obtenue par mise en oeuvre d'un procédé classique à contre courant,

les figures 3, 4, 5, 6, 7 et 8 sont des coupes de cette installation respectivement par des plans verticaux A, B, C, D, E et F,

la figure 9 est une vue schématique montrant les circulations d'air dans ladite installation,

la figure 10 est une vue schématique de principe illustrant un second mode de réalisation d'installation conforme à l'invention,

les figures 11 et 12 sont des schémas d'autres modes de réalisation.

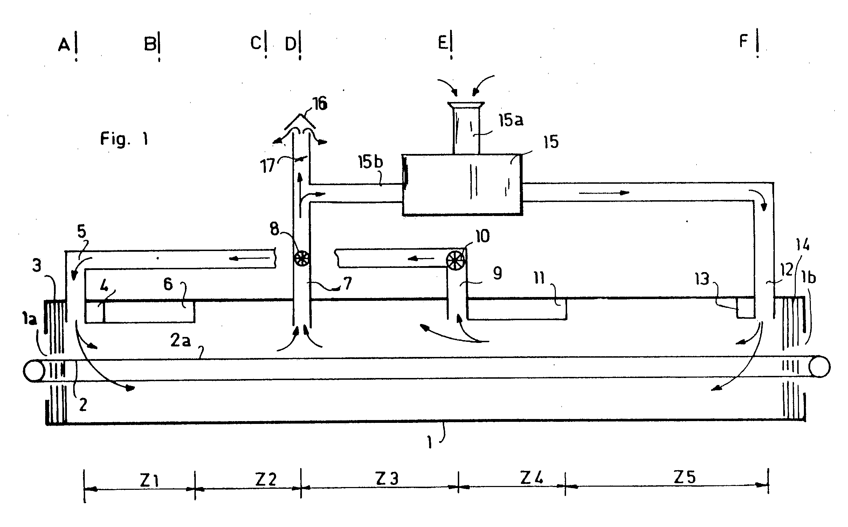

L'installation de séchage dont le principe est schématisé à la figure 1 comprend un tunnel 1 délimitant une cavité intérieure s'étendant entre une entrée de produits la et une sortie 1b; en l'exemple, le tunnel 1 est rectiligne et s'étend sur une longueur totale de l'ordre de 18 m.

Le tunnel 1 est équipé d'un conveyeur à tapis sans fin 2 ayant un brin actif supérieur 2a qui se déplace entre l'entrée et la sortie du tunnel. Ce tapis sans fin 2 est de type connu en soi, à mailles indéformables en fibres de verre, enduites de polytétrafluoroéthylène, de façon à être transparent à l'égard des ondes électromagnétiques hyperfréquences. Ce tapis glisse sur des tubes en verre ou autre matière, transparente aux ondes hyperfréquences et possédant un faible coefficient de friction; il est mu par un motovariateur permettant de régler la vitesse de translation des produits à sécher dans une plage comprise entre 0,1 m/min et 5 m/min.

A l'entrée la du tunnel, celui-ci est équipé de moyens d'arrêt de l'air 3 de type classique, aptes à autoriser le passage du tapis 2 et des produits et, en aval, de moyens de filtrage 4 formant une barrière au passage des ondes hyperfréquences. Entre ces moyens 3 et 4, débouche une gaine 5 de soufflage d'air chaud, dite gaine de soufflage secondaire, qui souffle dans la cavité du tunnel un premier flux d'air chaud de ventilation.

En aval des moyens de filtrage 4, est disposé un premier générateur d'ondes hyperfréquence 6, adapté pour irradier la cavité interne du tunnel sur une zone $Z_1$ qui est ventilée à co-courant par le premier flux de ventilation et peut avoir en l'exemple une longueur de l'ordre de 2 m. Ce générateur est composé de plusieurs magnétrons et applicateurs, répartis le long de ladite zone. Sa puissance est adaptée pour engendrer un rayonnement hyperfréquence tel que la densité de puissance au coeur des produits soit comprise entre 0,2 et 5 watt/cm$^3$ et puisse être réglé dans cette plage; la fréquence du rayonnement hyperfréquence est une fréquence industrielle habituelle (en particulier 2 450 Megahertz).

Le générateur 6 est associé à des moyens d'uniformisation du champ électromagnétique à l'intérieur de la cavité du tunnel; ces moyens peuvent revêtir des formes connues diverses et un exemple sera décrit plus loin.

En aval de la zone $Z_1$, les produits se déplacent le long d'une zone $Z_2$ de longueur de l'ordre de 2 m, où ils ne sont plus irradiés et sont ventilés à co-courant par le premier flux de ventilation après son passage le long de la zone $Z_1$; sur cette zone $Z_2$, ce flux se trouve donc moins chaud et plus humide que sur la zone $Z_1$.

A l'extrémité aval de la zone $Z_2$, le tunnel est équipé d'une gaine 7 d'extraction d'air pourvue d'un ventilateur d'extraction 8.

Le tunnel comporte ensuite une zone $Z_3$ s'étendant entre la gaine 7 et une gaine de dérivation 9 pourvue d'un ventilateur 10. La gaine 9 prélève dans le tunnel un flux dérivé, constitué par une fraction d'un second flux de ventilation qui est soufflé dans le tunnel au voisinage de sa sortie 1b, comme on le verra plus loin.

La gaine 9 est reliée à la gaine de soufflage secondaire 5 de sorte que le premier flux de ventilation est constitué par la fraction dérivée du second flux.

La fraction restante du second flux circule à contre-courant le long de la zone $Z_3$ avant d'être aspirée en même temps que le premier flux dans la gaine d'extraction 7. La zone $Z_3$ peut avoir une longueur de l'ordre de 3 m.

Immédiatement en aval de la gaine 9, le tunnel comporte un second générateur d'ondes hyperfréquence 11, adapté pour irradier sa cavité interne sur une zone $Z_4$ qui en l'exemple peut avoir 2 m de longueur; cette zone $Z_4$ est ventilée à contre-courant par le premier flux de ventilation précité. Ce générateur composé comme le précédent par des magnétrons et applicateurs répartis le long de la zone $Z_4$ est adapté pour engendrer au coeur des produits une densité de puissance du même ordre que précédemment, réglable sur une plage de 0,2 à 5 watt/cm³; ce générateur il est associé comme le précédent à des moyens d'uniformisation du champ électromagnétique à l'intérieur de la cavité du tunnel.

En aval de cette zone $Z_4$, les produits se déplacent le long d'une zone $Z_5$ de longueur de l'ordre de 5 m, où ils ne sont plus irradiés et sont ventilés à contre-courant par le second flux de ventilation.

Ce second flux de ventilation est insufflé dans le tunnel par une gaine de soufflage principal 12 située au voisinage de sa sortie 1b entre des moyens 13 de filtrage des ondes hyperfréquences (identiques aux moyens 4) et des moyens aval 14 d'arrêt de l'air (identiques aux moyens 3).

Le second flux de ventilation est engendré par un générateur d'air chaud sec 15 dont la sortie est reliée à la gaine de soufflage principal 12. Ce générateur possède une entrèe 15a recevant de l'air neuf et une entrée 15b reliée à la gaine d'extraction 7 en vue du recyclage d'une partie de l'air extrait. Une cheminée d'extraction 16 et un registre 17 permettent de rejeter une partie réglable de l'air extrait par la gaine d'extraction 7.

Le générateur d'air chaud 15 présente une puissance adaptée en fonction de la section du tunnel pour fournir un second flux de ventilation ayant les caractéristiques initiales suivantes:—
température comprise entre 110°C et 150°C,
hygrométrie inférieure à 10%,

vitesse V de balayage des produits le long des zones $Z_5$ et $Z_4$ comprise entre 3 et 15 m/s.

La dérivation (9, 10) et l'extraction (7, 8) sont adaptées de sorte que le flux dérivé (premier flux de ventilation) possède une vitesse $v_1$ de balayage des produits le long des zones $Z_1$ et $Z_2$ telle que 1 m/s≤$v_1$≤5 m/s (la vitesse $v_2$ de balayage des produits par la fraction restante du flux le long de la zone $Z_3$ étant bien entendu sensiblement égale à V-$v_1$).

Ainsi, l'installation conforme à l'invention comprend:
. un tronçon amont de co-courant, composé d'une zone amont irradiée et ventilée $Z_1$, voisine de l'entrée 1a, et d'une zone aval ventilée $Z_2$, voisine de la gaine d'extraction 7,
. un tronçon aval de contre-courant, composé d'une zone amont ventilée $Z_3$ voisine de la gaine d'extraction 7, d'une zone intermédiaire irradiée et ventilée $Z_4$ située en aval de la gaine de dérivation 9, et d'une zone aval ventilée $Z_5$ située au voisinage de la sortie 1b.

Dans l'exemple décrit, le tronçon aval de contre-courant s'étend sur une longueur plus de 2 fois supérieure à celle du tronçon amont de co-courant; en pratique, selon l'application, la longueur de ce tronçon de contre-courant sera ajustée dans une plage allant de 1,5 à 5 fois supérieure à celle du tronçon de co-courant, la fraction haute de cette plage correspondant à une installation possédant plusieurs zones $Z_4$ et $Z_5$ agencées successivement (par couple: zone irradiée et ventilée suivie d'une zone ventilée, non irradiée).

La vitesse de translation du tapis 2 étant réglée entre 0,2 et 2 m/min, les produits subissent les phases successives de traitement suivantes, au cours de leur déplacement entre l'entrée et la sortie du tunnel:
(a) irradiation (densité da) et ventilation pendant un laps de temps compris entre 1 et 10 min, (température ta, hygrométrie ha),
(b) ventilation à température moyenne tb inférieure à ta et à hygromètrie moyenne hb supérieure à ha, pendant un laps de temps compris entre 1 et 10 min,
(c) ventilation à température moyenne tc supérieure à tb et à hygrométrie moyenne hc inférieure à hb, pendant un laps de temps compris entre 1,5 et 15 min,
(d) irradiation de densité dd analogue à da, et ventilation à température moyenne td supérieure à ta et tc et à hygrométrie moyenne inférieure à ha et hc, pendant un laps de temps compris entre 1 min et 10 min,
(e) ventilation à température moyenne te supérieure à td et à hygrométrie moyenne he inférieure à hd, pendant un laps de temps compris entre 2,5 et 25 min.

A titre d'illustration sont fournis ci-après les paramètres et résultats d'experimentations effectués pour le séchage de carreaux en mélange d'argile et de matières premières, adapté pour l'obtention de céramique. Le taux initial d'humidité des produits, en poids, était de 7%, le taux final recherché étant de 1%; les carreaux sont disposés en mono-couche au voisinage les uns des autres sur le tapis, la dimension de chaque carreau étant de 100 mm/100 mm/9 mm.

Phase (a)
. durée : 2 min
. ta : 70°C
. ha : 40%
. $v_1$ : 3 m/s

Phase (b)
. durée : 2 min
. tb : 60°C
. hb : 45%
. $v_1$ : 3 m/s

Phase (c)
. durée : 3 min
. tc : 80°C
. hc : 40%
. $v_2$ : 6 m/s

Phase (d)
. durée : 2 min
. td : 95°C
. hd : 10%
. V : 9 m/s

Phase (e)
. durée : 5 min
. te : 130°C
. he : 5%
. V : 9 m/s

. puissance calorifique du générateur de chaleur 15: 80 000 Kcal/h,
. puissance totale des générateurs micro-ondes: 24 Kw,
. puissance mécanique totale des ventilateurs: 4,5 Kw,
. largeur de la cavité intérieure du tunnel: 500 mm,
. hauteur de ladite cavité: 250 mm.

La durée totale du cycle de séchage est donc en l'exemple de 14'; la consommation énergétique globale (énergie thermique et mécanique, énergie hyperfréquence) est de 1 700 Kcal/kg d'eau évaporée.

La courbe α de la figure 2 illustre en fonction du temps l'évolution du taux d'humidité moyen des produits: la courbe β est une courbe du même type dans le cas d'un séchage classique à contre-courant dans un tunnel de même dimension, dans lequel les caractéristiques du flux à contre-courant ont été ajustées pour obtenir le même état final des produits.

Ces courbes montrent l'influence des diverses phases du procédé conforme à l'invention. La durée du procédé à contre-courant est environ de 4 fois supérieure à celle du procédé de l'invention et la dépense énergétique environ 2 fois supérieure, ce qui met en relief l'avantage considérable apporté par l'invention.

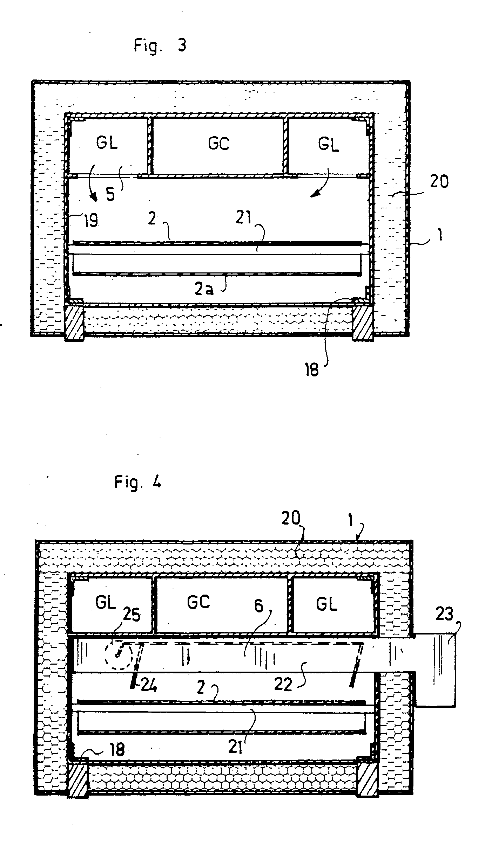

Par ailleurs, les figures 3, 4, 5, 6, 7, 8 et 9 présentent un mode de réalisation préféré de l'installation ci-dessus décrite. Les figures 3, 4, 5, 6, 7 et 8 sont des coupes transversales par six plans verticaux décalés, l'un A au niveau du soufflage secondaire 5, un autre B au niveau de la zone $Z_1$ comportant le générateur hyperfréquence 6 (ou de la zone $Z_4$ comportant le générateur 11), un autre C au niveau de la zone $Z_2$ (ou des zones $Z_3$ et $Z_5$), un autre D au niveau de l'extraction 7, un autre E au niveau de la dérivation 9, enfin un autre F au niveau du soufflage principal 12.

Dans ce mode de réalisation, le tunnel est formé d'une ossature 18 qui maintient une tôle quadrangulaire 19, entourée d'une couche d'un matériau de calorifugeage 20. Les gaines de soufflage sont insérées dans le tunnel et occupent la partie haute de celui-ci. En l'exemple, elles sont au nombre de trois, séparées par des cloisons: une gaine centrale $G_c$ qui sert, dans ce mode de réalisation, de gaine de soufflage principal 14, et deux gaines latérales $G_L$ qui servent de gaine de soufflage secondaire 5.

Au-dessous des gaines $G_c$ et $G_L$, un volume libre permet l'insertion d'un module rayonnant dans les zones $Z_1$ et $Z_4$, comme le montre la figure 4; le tapis 2 est situé au-dessous, son brin supérieur utile étant supporté par les rouleaux 21 déjà évoqués.

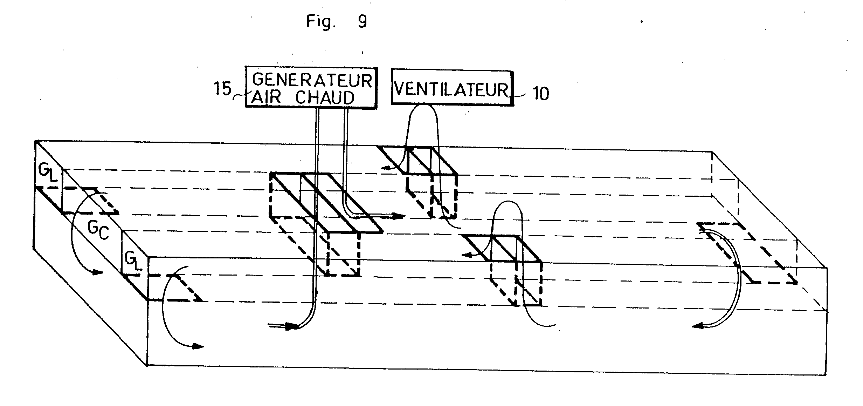

La figure 9 montre les circulations d'air dans ledit tunnel. Il est à noter que des moyens (non représentés) sont prévus dans la cavité où circule le tapis pour guider l'air de façon à l'amener à traverser les produits en vue d'obtenir un bon balayage de ceux-ci (bavettes d'arrêt et gaines verticales de reprise sur les côtés).

La figure 3 montre, au voisinage de l'entrée, le passage du premier flux de ventilation (flux dérivé) depuis les gaines latérales $G_L$ vers la cavité du tunnel grâce à une lumière que comportent ces gaines sur leur face inférieure.

La figure 4 illustre l'agencement d'un module rayonnant au niveau de la zone $Z_1$. Ce module comprend un applicateur d'onde formé par un guide d'onde transversal 22 (rectiligne ou possédant des méandres), doté de fentes rayonnantes sur sa face inférieure. Ce guide est assujetti à la sortie d'un magnétron 23 appelé à venir se disposer sur le côté du tunnel.

Le guide 22 s'insère dans le tunnel par une ouverture appropriée que possède ce dernier sur un côté. Le guide 22 est équipé d'un système mécanique d'uniformisation du champ électromagnétique, constitué en l'exemple par deux plaques métalliques oscillantes telles que 24, entraînées dans un mouvement pendulaire par un moteur lent, de faible puissance 25 par l'entremise d'un système excentrique.

Dans le cas d'un guide formant des méandres, celui-ci est soudé sur une plaque inférieure, ouverte au niveau de ses fentes, plaque faisant corps avec le magnétron d'alimentation.

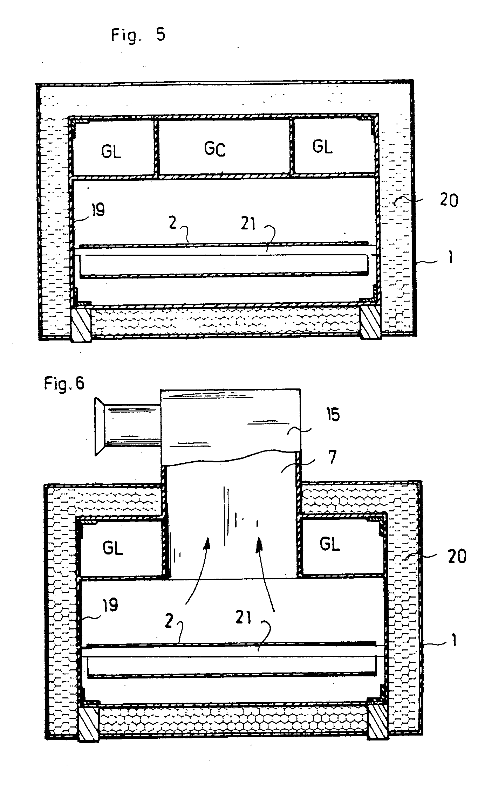

La figure 5 montre le tunnel au niveau de la zone $Z_2$ ventilée.

La figure 6 montre le tunnel au niveau de l'extraction; l'air humidifié provenant, d'une part, du tronçon amont de co-courant, d'autre part, du tronçon aval de contre-courant, est aspiré vers le haut à travers la gaine centrale $G_c$ par le ventilateur 8 vers le générateur d'air chaud 15 ou la cheminée d'extraction 16; la gaine centrale $G_c$ est obturée à ce niveau par deux parois pour guider l'air verticalement.

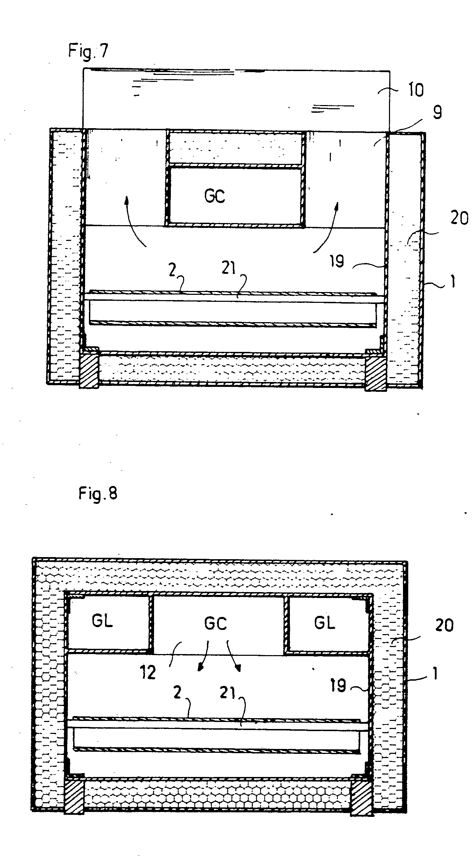

La figure 7 montre le tunnel au niveau de la dérivation 9; une fraction de l'air provenant de la zone $Z_4$ est aspirée vers le haut à travers les gaines latérales $G_L$ par le ventilateur 10 qui le refoule en amont dans lesdites gaines latérales; celles-ci sont obturées à ce niveau par deux parois et comportent une lumière de passage ascendant entre lesdites parois et un lumière de passage descendant à l'amont desdites parois.

La figure 8 montre le tunnel au voisinage de sa sortie 1b; l'air sortant du générateur d'air chaud est refoulé à la sortie de celui-ci dans le gaine centrale $G_c$, qui est ouverte vers la cavité du tunnel à son extrémité proche de la sortie; l'air passe ainsi dans le sens descendant dans cette cavité où il circule à contre-courant dans la zone $Z_5$, puis $Z_4$, enfin $Z_3$ pour la fraction restante du flux.

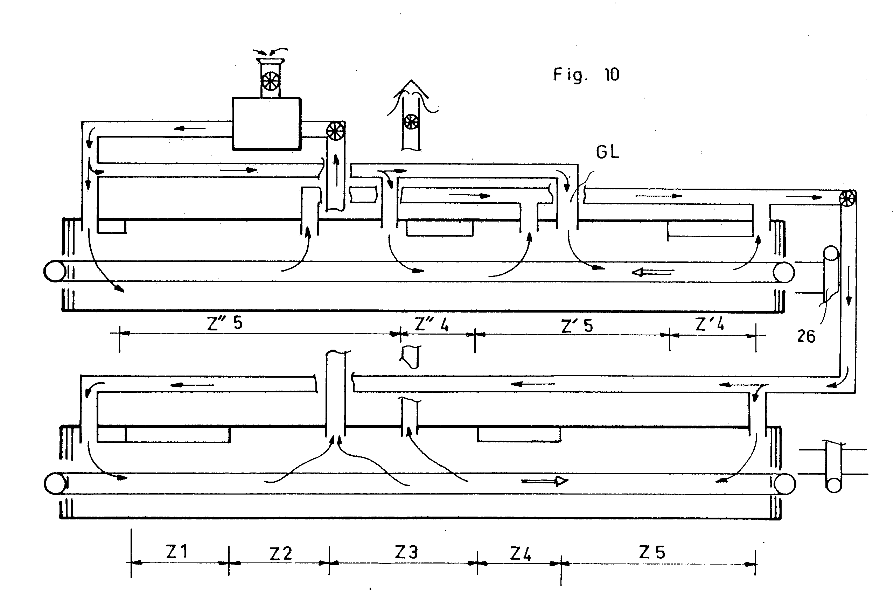

Le déplacement des produits, qui est rectiligne dans l'exemple ci-dessus décrit, peut avoir d'autres formes et la figure 10 présente schématiquement une variante d'installation dans laquelle les produits se déplacent le long de deux tunnels superposés, entourés comme précédemment par un calorifugeage.

Chaque tunnel est équipé d'un tapis sans fin, les brins utiles supérieurs de ces tapis progressant en sens inverse de sorte que la sortie de l'installation se trouve située au-dessus de son entrée. A une extrémité un organe ascendant 26 de type classique permet de transférer en continu les produits d'un tapis à l'autre.

Le parcours des produits s'effectue comme précédemment le long de zones $Z_1$ et $Z_2$ à co-courant et de zones à contre-courant; en l'exemple, ces zones à contre-courant comprennent une zone $Z_3$ telle que déjà définie et trois couples de zones $(Z_4, Z_5)$, $(Z'_4, Z'_5)$ et $(Z''_4, Z''_5)$ analogues aux zones $Z_4$ et $Z_5$ déjà définies.

Les zones $Z_1$, $Z_2$, $Z_3$, $Z_4$ et $Z_5$ sont situées le long du tunnel inférieur, les zones $Z'_4$, $Z'_5$ et $Z''_4$ et $Z''_5$ étant situées le long du tunnel supérieur de sorte que le tronçon de contre-courant est beaucoup plus long que précédemment. Les zones $Z_5$, $Z'_5$ et $Z''_5$ sont alimentées en air dans les mêmes conditions de température et d'hygrométrie, grâce à des dérivations par les gaines latérales $G_L$. La figure 10 illustre les circulations d'air et les positions respectives des diverses zones.

Bien entendu, il est possible de prévoir un nombre supérieur de niveaux ou, le cas échéant, de faire circuler les produits depuis les niveaux supérieurs vers les niveaux inférieurs (avec aux extrémités, des tunnels des organes descendants).

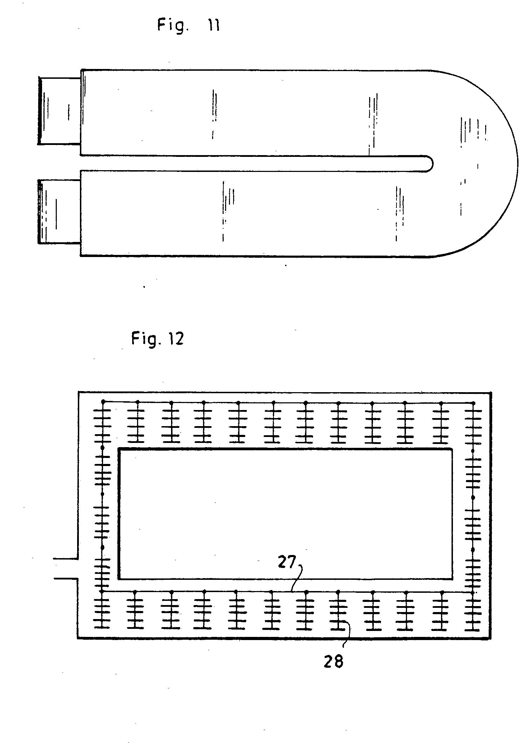

La figure 11 illustre un autre mode de réalisation dans lequel deux tunnels sont juxtaposés sur un même niveau. A une extrémité, un organe de transfert fait circuler sur 180° les produits du tapis d'un tunnel à celui de l'autre tunnel. La succession des zones $Z_1$, $Z_2$... est analogue à celle déjà décrite.

Enfin, la figure 12 illustre un autre mode de réalisation dans lequel les produits sont transportés dans un tunnel formant une boucle fermée dans un plan vertical, par un convoyeur à balancelles 27. Chaque balancelle comprend une série de plateaux superposés 28, sur chacun desquels sont disposés les produits en monocouche.

Ces balancelles sont construites en matériaux transparents aux ondes hyperfréquences. Les produits défilent comme précédemment devant des guides d'ondes, de préférence placés dans des plans verticaux, le long d'un côté du tunnel, afin d'exposer de façon uniforme tous les plateaux d'une balancelle.

Il est à noter que, dans ce dernier type d'installation, il est possible de prévoir un système de guides rayonnant, assujetti sur le côté de chaque balancelle. Les magnétrons restent fixes et, grâce à une avance séquentielle des balancelles, viennent s'accoupler dans les zones correspondantes $(Z_1, Z_4, Z'_4...)$ au système de guides de la balancelle concernée pour irradier les produits portés par celle-ci.

Bien entendu, l'installation conforme à l'invention est équipée de sondes thermométriques et hygrométriques permettant de contrôler, et le cas échéant réguler, les caractéristiques des flux d'air.

**Revendications**

1. Procédé de séchage de produits humides, caractérisé en ce qu'il consiste à soumettre successivement les produits au phases suivantes de traitement:

(a) exposer les produits à un rayonnement électromagnétique hyperfréquence et, simultanément, les ventiler au moyen d'un flux gazeux chaud et non saturé,

(b) ventiler ensuite lesdits produits au moyen d'un flux gazeux chaud et non saturé, de température moyenne inférieure à celle du flux de la phase (a),

(c) ventiler ensuite lesdits produits au moyen d'un flux gazeux chaud et non saturé, de température moyenne supérieure à celle du flux de la phase (b) et d'hygrométrie inférieure à celle dudit flux,

(d) exposer ensuite les produits à un rayonnement électromagnétique hyperfréquence et, simultanément, les ventiler au moyen d'un flux gazeux chaud et non saturé, de température moyenne supérieure à celle du flux de la phase (a) et d'hygrométrie inférieure à celle dudit flux,

(e) ventiler ensuite lesdits produits au moyen d'un flux gazeux chaud et non saturé, de température moyenne supérieure à celle du flux de la phase (d) et d'hygrométrie inférieure à celle dudit flux.

2. Procédé de séchage selon la revendication 1, caractérisé en ce qu'il consiste à soumettre successivement les produits aux phases suivantes de traitement:

(a) pendant un laps de temps compris entre 1 min et 10 min, exposer les produits à un rayonnement électromagnétique hyperfréquence tel que la densité de puissance moyenne au niveau des produits soit comprise entre 0,2 et 5 watt/cm³, et, simultanément, ventiler lesdits produits au moyen d'un flux gazeux chaud, de température comprise entre 90°C et 50°C et d'hygrométrie comprise entre 10% et 50%,

(b) pendant un laps de temps compris entre 1 min et 10 min, ventiler lesdits produits au moyen d'un flux gazeux chaud de température comprise entre 80°C et 40°C et d'hygrométrie comprise entre 15% et 60%,

(c) pendant un laps de temps compris entre 1,5 min et 15 min, ventiler lesdits produits au moyen d'un flux gazeux chaud de température comprise entre 40°C et 110°C et d'hygrométrie comprise entre 50% et 10%,

(d) pendant un laps de temps compris entre 1 min et 10 min, exposer les produits à un rayonnement électromagnétique hyperfréquence tel que la densité de puissance moyenne au niveau des produits soit comprise entre 0,2 et 5 watt/cm³ et, simultanément, ventiler lesdits produits au moyen d'un flux gazeux chaud, de température comprise entre 80°C et 130°C et d'hygrométrie comprise entre 15% et 5%,

(e) pendant un laps de temps compris entre 2,5 min et 25 min, ventiler lesdits produits au moyen d'un flux gazeux chaud de température comprise entre 110°C et 150°C et d'hygrométrie inférieure à 10%.

3. Procédé de séchage selon l'une des revendications 1 ou 2, caractérisé en ce que, après la phase (e), on soumet les produits au mois une fois à des phases (d') et (e') identiques aux phases (d) et (e).

4. Procédé de séchage selon l'une des revendications 1, 2 ou 3, caractérisé en ce que:

. au cours des phases successives (a) et (b), les produits sont déplacés à co-courant dans un premier flux gazeux de ventilation présentant des conditions initiales correspondant à celles de la phase (a), le déplacement à co-courant des produits étant effectué de sorte qu'après s'être chargé en humidité et avoir perdu des calories, ledit premier flux gazeux se retrouve dans des conditions finales correspondant à celles de la phase (b),

. au cours des phases suivantes (c), (d) et (e), éventuellement (d'), (e'), les produits sont déplacés à contre-courant dans un second flux gazeux de ventilation présentant des conditions initiales correspondant à celles de la dernière phase (e) ou (e'), le déplacement à contre-courant des produits étant effectué de sorte qu'après s'être chargé en humidité et avoir perdu des calories, ledit second flux gazeux se retrouve dans des conditions intermédiaires correspondant à celles de la phase (d) et dans des conditions finales correspondant à celles de la phase (c).

5. Procédé de séchage selon la revendication 4, caractérisé en ce que:

. le premier flux de ventilation est obtenu par dérivation d'une fraction du second flux après son passage à contre-courant sur les produits au cours des phases (e) et (d), et éventuellement (e'), (d'), la ventilation réalisée à la phase (c) étant assurée à contre-courant au moyen de la fraction restante dudit second flux, tandis que les ventilations des phases (a) et (b) sont assurées à co-courant au moyen de la fraction dérivée dudit second flux,

. la fraction restante du second flux et la fraction dérivée constituant le premier flux sont, au moins en partie, recyclées et traitées en vue de régénérer le second flux avec ses conditions initiales correspondant à celles de la dernière phase (e) ou (e').

6. Procédé de séchage selon l'une des revendications 4 ou 5, caractérisé en ce que:

. les produits sont déplacés en continu ou séquentiellement dans un tunnel (1) comprenant, de l'amont vers l'aval par rapport au sens de déplacement desdits produits, une entrée (1a) des produits, un tronçon de cocourant $(Z_1, Z_2)$, un tronçon de contre-courant $(Z_3, Z_4, Z_5, Z'_4, Z'_5)$ et une sortie (1b) des produits,

. le premier flux de ventilation est admis dans le tunnel (1) au voisinage de son entrée (1a),

. le second flux de ventilation est admis dans le tunnel (1) au voisinage de sa sortie (1b),

. lesdits premier flux et second flux sont extraits du tunnel en un point intermédiaire (7) situé entre le tronçon de co-courant et le tronçon de contre-courant.

7. Procédé de séchage selon la revendication 6, mis en oeuvre dans un tunnel (1) ayant une cavité de section approximativement constante, caractérisé en ce que:

. le second flux de ventilation est engendré de façon à présenter, au cours des phases (e) et (d), une vitesse de balayage V des produits comprise entre 3 et 15 m/s,

. la fraction dérivée est adjustée de façon que le premier flux présente, au cours des phases (a) et (b), une vitesse $v_1$ de balayage telle que $1 \text{ m/s} \leqslant v_1 \leqslant 5 \text{ m/s}$, la fraction restante présentant, au cours de la phase (c), une vitesse $v_2$ de balayage sensiblement égale à $V-v_1$.

8. Procédé de séchage selon l'une des revendications 6 ou 7, dans lequel les produits sont disposés en monocouche sur au moins un tapis sans fin (2), chaque tapis ayant un brin utile rectiligne (2a) se déplaçant à vitesse constante réglable, de façon à transporter les produits entre l'entrée (1a) et la sortie (1b) du tunnel.

9. Procédé de séchage selon l'une des revendications 6 ou 7, dans lequel les produits sont transportés entre l'entrée et la sortie du tunnel par un convoyeur à balancelles (27), chaque balancelle comprenant une série de plateaux superposés (28) sur chacun desquels sont disposés les produits en monocouche.

10. Procédé conformé à l'une des revendications 1, 2, 3, 4, 5, 6, 7, 8 ou 9 pour le séchage de produits constitués par des mélanges à base d'argile, en vue de l'obtention de produits en céramique, caractérisé en ce que:

. la phase (a) est réalisée dans les conditions suivantes: durée de l'ordre de 2 min, densité de puissance moyenne de l'ordre de 0,6 watt/cm³, température moyenne du flux gazeux de l'ordre de 70°C et hygrométrie moyenne dudit flux de l'ordre de 40%,

. la phase (b) est réalisée dans les conditions suivantes: durée de l'ordre de 2 min, température moyenne du flux gazeux de l'ordre de 60°C, hygrométrie moyenne dudit flux de l'ordre de 45%,

. la phase (c) est réalisée dans les conditions suivantes: durée de l'ordre de 3 min, température moyenne du flux gazeux de l'ordre de 80°C, hygrométrie moyenne dudit flux de l'ordre de 40%,

. la phase (d) (ou éventuellement (d')) est réalisée dans les conditions suivantes: durée de l'ordre de 2 min, densité de puissance moyenne de l'ordre de 0,6 watt/cm³, température moyenne du flux gazeux de l'ordre de 95°C et hygrométrie moyenne dudit flux de l'ordre de 10%,

. la phase (e) (ou éventuellement (e')) est réalisée dans les conditions suivantes: durée de l'ordre de 5 min, température moyenne du flux gazeux de l'ordre de 130°C et hygrométrie moyenne dudit flux de l'ordre de 5%.

11. Installation de séchage de produits humides en vue de la mise en oeuvre du procédé conforme à l'une des revendications précédentes, comprenant un tunnel (1) délimitant une cavité intérieure pour le passage des produits entre une entrée (1a) et une sortie (1b), un conveyeur (2, 27) adapté pour transporter les produits le long dudit tunnel depuis son entrée jusqu'à sa sortie, et des moyens de génération d'air chaud sec (15), ladite installation de séchage étant caractérisée en ce qu'elle comprend:

. une gaine de soufflage d'air chaud (12) dite gaine de soufflage principal, débouchant dans la cavité du tunnel au voisinage de sa sortie (1b),

. une gaine de soufflage d'air chaud (5) dite gaine de soufflage secondaire, débouchant dans la cavité du tunnel au voisinage de son entrée (1a),

. une gaine d'extraction d'air (7), débouchant dans la cavité en un point intermédiaire de la longueur de cette dernière, de façon a séparer celle-ci en un tronçon amont de co-courant et un tronçon aval de contre-courant,

. un premier générateur d'ondes hyperfréquence (6), agencé pour irradier le tronçon de co-courant sur une fraction amont de sa longueur située au voisinage de l'entrée, de façon à délimiter deux zones successives le long dudit tronçon de co-courant: une zone amont, irradiée et ventilée ($Z_1$) voisine de l'entrée, et une zone aval ventilée ($Z_2$) voisine de la gaine d'extraction,

. au moins un second générateur d'ondes hyperfréquence (11), agencé pour irradier le tronçon de contre-courant sur une fraction intermédiaire de sa longueur, de façon à délimiter au moins trois zones successives le long dudit tronçon de contre-courant: une zone amont ventilée ($Z_3$) voisine de la gaine d'extraction, au moins une zone intermédiaire irradiée et ventilée ($Z_4$) et au moins une zone aval ventilée ($Z_5$).

12. Installation de séchage selon la revendication 11, caractérisée en ce qu'elle comprend:

. un générateur d'air chaud sec (15) ayant une entrée (15b) reliée à la gaine d'extraction (7) et une sortie (15a) reliée à la gaine de soufflage principal (12),

. une gaine de dérivation (9) s'échappant du tronçon de contre-courant et reliée à la gaine de soufflage secondaire (5), ladite gaine de dérivation étant équipée d'un ventilateur (10) pour engendrer une circulation d'air vers la gaine de soufflage secondaire.

13. Installation de séchage selon la revendication 12, caractérisée en ce que la gaine de dérivation (9) s'échappe du tronçon de contre-courant en un point située immédiatement en amont du second générateur d'ondes hyperfréquence (11), entre les zones ($Z_3$) et ($Z_4$).

14. Installation de séchage selon l'une des revendications 11, 12 ou 13, dans laquelle:

. l'entrée (1a) du tunnel est équipée, de l'amont vers l'aval, de moyens d'arrêt de l'air (3) aptes à autoriser le passage des produits, et de moyens de filtrage (4) formant une barrière au passage des ondes hyperfréquences, la gaine de soufflage secondaire (5) débouchant entre lesdites moyens d'arrêt et lesdits moyens de filtrage,

. la sortie (1b) du tunnel est équipée, de l'amont vers l'aval, de moyens de filtrage (13) formant une barrière au passage des ondes hyperfréquences, et de moyens d'arrêt de l'air (14) aptes à autoriser le passage des produits, la gaine de soufflage principal (12) débouchant entre lesdits moyens de filtrage et lesdits moyens d'arrêt.

15. Installation de séchage selon l'une des revendications 11, 12, 13 ou 14, dans laquelle chaque générateur d'ondes hyperfréquence (6, 11) est équipé de moyens (24, 25) d'uniformisation du champ à l'intérieur de la cavité du tunnel, dans les zones irradiées correspondantes ($Z_1$) et ($Z_4$).

16. Installation de séchage selon l'une des revendications 11, 12, 13, 14 ou 15, caractérisée en ce que le tronçon de contre-courant s'étend sur une longueur de 1,5 à 5 fois supérieure à celle du tronçon de co-courant.

17. Installation de séchage selon l'une des revendications 11, 12, 13, 14, 15 ou 16, caractérisée en ce que les gaine de soufflage principale (12) et gaine de soufflage secondaire (5) sont insérées dans le tunnel, lequel est entouré par un matériau de calorifugeage (20), chaque générateur d'onde hyperfréquence se présentant sous la forme d'au moins un module de forme adaptée pour s'insérer dans ledit tunnel afin de rayonner vers le convoyeur.

18. Installation de séchage selon la revendication 17, comprenant au moins deux tunnels superposés, le conveyeur comportant un tapis sans fin disposé dans chaque tunnel et un organe ascendant ou descendant situé à l'extrémité desdits tunnels pour transférer les produits d'un tunnel à l'autre.

**Patentansprüche**

1. Verfahren zum Trocknen von nassen Waren, dadurch gekennzeichnet, daß das Verfahren darin besteht, die Waren nacheinander folgenden Behandlungsphasen zu unterwerfen:

(a) Die Waren werden einer elektromagnetischen Strahlung mit Ultrahochfrequenz ausgesetzt und gleichzeitig mittels eines heißen und nicht gesättigten Gasstromes belüftet,

(b) anschließend werden die Waren mittels eines heißen und nicht gesättigten Gasstroms belüftet, welcher eine mittlere Temperatur aufweist, die unterhalb derer des Gasstroms der Phase (a) liegt,

(c) die Waren werden anschließend mittels eines heißen und nicht gesättigten Gasstroms belüftet, dessen mittlere Temperatur oberhalb derjenigen des Gastroms der Phase (b) liegt und dessen Feuchtigkeit unterhalb desjenigen besagten Gasstromes liegt,

(d) die Waren werden anschließend einer elektromagnetischen Strahlung mit Ultrahochfrequenz ausgesetzt und gleichzeitig mittels eines heißen und nicht gesättigten Gasstroms belüftet, dessen mittlere Temperatur oberhalb derjenigen des Gasstroms der Phase (a) und dessen Feuchtigkeitsgrad unterhalb desjenigen besagten Gasstroms liegt,

(e) die Waren werden anschließend mittels eines heißen und nicht gesättigten Gasstroms belüftet, dessen mittlere Temperatur oberhalb derjenigen des Gasstroms der Phase (d) liegt, und dessen Feuchtigkeitsgrad unterhalb desjenigen besagten Gasstroms liegt.

2. Verfahren zum Trocknen nach Anspruch 1, dadurch gekennzeichnet, daß die Waren nacheinander den nachfolgenden Behandlungsphasen unterworfen werden:

(a) während eines innerhalb 1 min und 10 min liegenden Zeitabschnittes werden die Waren einer derartigen elektromagnetischen Ultrahochfrequenzstrahlung ausgesetzt, daß die mittlere Leistungsdichte in Höhe der Waren innerhalb von 0,2 und 5 Watt/cm$^3$ liegt, und daß gleichzeitig die Waren mit einem heißen Gasstrom belüftet werden, dessen Temperatur zwischen 90°C und 50°C liegt und dessen Feuchtigkeitsgrad zwischen 10% und 50% liegt,

(b) während eines innerhalb von 1 min und 10 min liegenden Zeitabschnittes werden die genannten Waren mit einem heißen Gasstrom belüftet, dessen Temperatur zwischen 80°C und 40°C liegt und dessen Feuchtigkeitsgrad zwischen 15% und 60% liegt,

(c) während eines zwischen 1,5 min und 15 min liegenden Zeitabschnittes werden die besagten Waren mit einem heißen Gasstrom belüftet, dessen Temperatur zwischen 40°C und 110°C liegt und dessen Feuchtigkeitsgrad zwischen 50% und 10% liegt,

(d) während eines zwischen 1 min und 10 min liegenden Zeitraumes werden die Waren einer derartigen elektromagnetischen Ultrahochfrequenzstrahlung ausgesetzt, daß die mittlere Leistungsdichte in Höhe der Waren zwischen 0,2 und 5 Watt/cm$^3$ liegt, und daß gleichzeitig die besagten Waren mittels eines heißen Gasstroms belüftet werden, dessen Temperatur zwischen 80°C und 130°C liegt und dessen Feuchtigkeitsgrad zwischen 15% und 5% liegt,

(e) während eines zwischen 2,5 min und 25 min liegenden Zeitraumes werden die besagten Produkte mittels eines heißen Gasstroms belüftet, dessen Temperatur zwischen 110°C und 150°C liegt und dessen Feuchtigkeitsgrad unter 10% liegt.

3. Verfahren nach einem der Ansprüche 1 oder 2, dadurch gekennzeichnet, daß die Waren nach der Phase (e) wenigstens einmal Phasen (d') und (e') unterworfen werden, welche den Phasen (d) und (e) identisch sind.

4. Verfahren nach einem der Ansprüche 1, 2 oder 3, dadurch gekennzeichnet:

. daß während aufeinanderfolgender Phasen (a) und (b) die Waren in gleicher Stromrichtung in einen ersten Belüftungs-Gasstrom bewegt werden, welcher Anfangsbedingungen aufweist, die denjenigen der Phase (a) entsprechen, wobei die in gleicher Stromrichtung erfolgende Bewegung der Waren derart erfolgt, daß der erste Gasstrom sich nach Feuchtigkeitsaufnahme und Wärmeverlust in Endbedingungen befindet, die denjenigen der Phase (b) entsprechen,

. daß während aufeinanderfolgender Phasen (c), (d) und (e), ggf. (d'), (e') die Waren in Gegenstromrichtung in einem zweiten Ventilations-Gasstrom bewegt werden, welcher Anfangsbedingungen aufweist, die denjenigen der letzten Phase (e) oder (e') entsprechen, wobei die Bewegung der Waren in Gegenstromrichtung derart erfolgt, daß sich besagter zweiter Gasstrom nach Feuchtigkeitsaufnahme und nach Wärmeverlust in Zwischenbedingungen befindet, welche denjenigen der Phase (d) entsprechen und in Endbedingungen, welche denjenigen der Phase (c) entsprechen.

5. Verfahren zum Trocknen nach Anspruch 4, dadurch gekennzeichnet, daß:

. der erste Gasstrom durch Abzweigung eines Teils des zweiten Stromes erhalten wird, nachdem dieser im Gegenstrom über die Waren während der Phasen (e) und (d) und ggf. (e'), (d') geführt ist, wobei die bei der Phase (c) erfolgte Belüftung in Gegenstromrichtung mittels des verbleibenden Teils des besagten zweiten Gasstroms sichergestellt wird, während die Belüftungen der Phasen (a) und (b) in gleicher Stromrichtung mittels des von besagtem zweiten Strom abgeleiteten Teils sichergestellt werden,

. daß der verbleibende Teil des zweiten Gasstroms und der den ersten Gasstrom bildende abgeleitete Teil wenigstens teilweise im Kreislauf geführt und dahingehend behandelt werden, daß der zweite Gasstrom mit seinen Anfangsbedingungen so regeneriert wird, daß diese denjenigen der letzten Phase (e) oder (e') entsprechen.

6. Verfahren zum Trocknen nach einem der Ansprüche 4 oder 5, dadurch gekennzeichnet, daß

. die Waren kontinuierlich oder sequentiell in einem Tunnel (1) bewegt werden, welcher vom stromauf gelegenen Ende zum stromab gelegenen Ende—bezogen auf die Bewegungsrichtung der Waren—einen Eingang (1a) für die Waren, einen Gleichstrom-Teilabschnitt ($Z_1$, $Z_2$), einen Gegenstromteilabschnitt ($Z_3$, $Z_4$, $Z_5$, $Z'_4$, $Z'_5$) und einen Ausgang (1b) für die Waren aufweist,

. daß der erste Gasstrom in den Tunnel (1) in der Nähe seines Eingangs (1a) zugeführt wird,

. daß der zweite Gasstrom in den Tunnel (1) in der Nähe seines Ausgangs (1b) zugeführt wird,

. daß besagter erster und zweiter Gasstrom an einem Zwischenpunkt (7) aus dem Tunnel extrahiert werden, welcher zwischen dem Gleichstrom-Teilabschnitt und dem Gegenstrom-Teilabschnitt liegt.

7. Verfahren zum Trocknen nach Anspruch 6, welches in einem Tunnel (1) durchgeführt wird, der eine etwa im wesentlichen konstante Querschnittsöffnung aufweist, dadurch gekennzeichnet,

. daß der zweite Gasstrom so erzeugt wird, daß während der Phasen (c) und (d) die Waren eine Spülgeschwindigkeit V zwischen 3 und 15 m/s aufweisen,

. daß der abgeleitet Teil so eingestellt wird, daß der erste Gasstrom während der Phasen (a) und (b) eine Spülgeschwindigkeit $v_1$ von etwa 1 m/s$\leq v_1 \leq$5 m/s bewirkt, wobei die Spülgeschwindigkeit $v_2$ des verbleibenden Teils während der Phase (c) im wesentlichen dem Wert $V - v_1$ entspricht.

8. Verfahren zum Trocknen nach einem der Ansprüche 6 oder 7, bei dem die Waren in einer Monolage auf wenigstens einer endlos umlaufenden Unterlage (2) angeordnet sind, und bei dem jede Unterlage einen geradlinig verlaufenden Nutztrum (2a) hat, welcher zum Transport der Waren zwischen dem Eingang (1a) und dem Ausgang (1b) des Tunnels mit regelbarer konstanter Geschwindigkeit bewegt wird.

9. Verfahren zum Trocknen nach einem der Ansprüche 6 oder 7, bei dem die Waren zwischen dem Eingang und dem Ausgang des Tunnels mittels eines Gehängeförderers (27) transportiert werden, wobei jedes Gehänge eine Reihe von übereinander angeordneten Platten (28) aufweist, auf denen sich die Waren in Monolage befinden.

10. Verfahren nach einem der Ansprüche 1, 2, 3, 4, 5, 6, 7, 8 oder 9 zum Trocknen von Waren, welche zum Zwecke der Erzeugung keramischer Produkte durch Mischungen auf der Basis von Ton gebildet sind, dadurch gekennzeichnet,

. daß die Phase (a) unter den folgenden Bedingungen realisiert wird: Dauer in der Größenordnung von 2 Minuten, mittlere Leistungsdichte in der Größenordnung von 0,6 Watt/cm³, mittlere Gasstromtemperatur in der Größenordnung von 70°C und mittlere Feuchtigkeit besagten Stroms in der Größenordnung von 40%,

. daß die Phase (b) unter folgenden Bedingungen realisiert wird: Dauer in der Größenordnung von 2 Minuten, mittlere Temperatur des Gasstroms in der Größenordnung von 60°C, mittlerer Feuchtigkeitsgrad des Gasstroms in der Größenordnung von 45%,

. daß die Phase (c) unter folgenden Bedingungen realisiert wird: Dauer in der Größenordnung von 3 Minuten, mittlere Temperatur des Gasstroms in der Größenordnung von 80°C, mittlerer Feuchtigkeitsgrad besagten Stroms in der Größenordnung von 40%,

. daß die Phase (d) (oder ggf. (d')) unter folgenden Bedingungen realisiert wird: Dauer in der Größenordnung von 2 Minuten, mittlere Energiedichte in der Größenordnung von 0,6 Watt/cm³, mittlere Temperatur des Gasstroms in der Größenordnung von 95°C und mittlerer Feuchtigkeitsgrad des besagten Flusses in der Größenordnung von 10%,

. daß die Phase (e) (oder ggf. (e')) unter folgenden Bedingungen realisiert wird: Dauer in der Größenordnung von 5 Minuten, mittlere Temperatur des Gasstroms in der Größenordnung von 130°C und mittlerer Feuchtigkeitsgrad besagten Flusses in der Größenordnung von 5%.

11. Vorrichtung zum Trocknen nasser Waren zur Durchführung des Verfahrens nach einem der vorhergehenden Ansprüche, mit einem Tunnel (1), welcher einen Innenhohlraum für die Passage der Waren zwischen einem Eingang (1a) und einem Ausgang (1b) begrenzt, einem Förderer (2, 27), welcher zum Transport der Waren längs besagten Tunnels zwischen dessen Eingang bis zu dessen Ausgang geeignet ist, und mit Einrichtungen (15) zur Erzeugung trockener heißerLuft, wobei besagte Trocknungsvorrichtung durch folgende Merkmale gekennzeichnet ist:

. einen Kanal (12) für die Zufuhr heißer Luft, nachfolgend Hauptluftzuführung genannt, welche in der Nähe des Ausgangs (1b) in den Hohlraum des Tunnels mündet,

. einen Kanal (5) für die Zufuhr warmer Luft, nachfolgende Sekundärluftzuführung genannt, welcher in der Nähe des Einganges (1a) in den Hohlraum des Tunnels mündet,

. einen Luftextraktionskanal (7), der an einem zwischen den Enden des Tunnels befindlichen Punkt in den Hohlraum mündet, derart, daß dadurch der Tunnel in einen stromaufwärts gelegenen Gleichstrom-Teilabschnitt und einen stromabwärts gelegenen Gegenstrom-Teilabschnitt aufgeteilt wird,

. einen ersten Generator (6) zur Erzeugung von Ultrahochfrequenzwellen, welcher derart angeordnet ist, daß der Gegenstrom-Teilabschnitt auf einem Teil seiner Länge bestrahlt wird, derart, daß wenigstens drei aufeinanderfolgende Zonen längs besagten Gegenstrom-Teilabschnittes gebildet werden: eine belüftete Stromauf gelegene, dem Extraktionskanal benachbarte Zone (Z₃), wenigstens eine bestrahlte und belüftete Zwischenzone (Z₄) und wenigstens eine stromabwärts gelegene belüftete Zone (Z₅).

12. Vorrichtung zum Trocknen gemäß Anspruch 11, dadurch gekennzeichnet, daß die Vorrichtung folgende Bestandteile aufweist:

. einen Generator (15) zur Erzeugung heißer Luft mit einem Eingang (15b), der mit dem Extraktionskanal (7) verbunden ist und einen Ausgang (15a), der mit der Hauptluftzuführung (12) verbunden ist,

. ein aus dem Gegenstrom-Teilabschnitt austretender Ableitungskanal (9), mit einem Ventilator (10) zur Erzeugung einer in Richtung auf die Sekundärluftzuführung gerichteten Luftströmung.

13. Vorrichtung zum Trocknen nach Anspruch 12, dadurch gekennzeichnet, daß der Ableitungskanal (9) an einem Punkt in dem Gegenstrom-Teilabschnitt mündet, welcher stromaufwärts gesehen unmittelbar dem zweiten Generator (11) zur Erzeugung von Ultrahochfrequenzwellen benachbart ist, und zwar zwischen den Zonen (Z₃) und (Z₄).

14. Vorrichtung zum Trocknen nach einem der Ansprüche 11, 12 oder 13, bei der:

. der Eingang (1a) des Tunnels vom stromauf gelegenen Ende zum stromab gelegenen Ende gesehen mit Luftaustrittsverhinderungseinrichtungen (3) versehen ist, welche dazu geeignet sind, den Durchlaß der Waren zu gestatten, und bei der Filtereinrichtungen (4) vorgesehen sind, welche ein Durchlaßhemmnis für die Ultrahochfrequenzwellen darstellen, und bei der die Sekundärluftzuführung (5) zwischen besagten Luftaustrittsverhinderungseinrichtungen und Filtereinrichtungen mündet,

. der Ausgang (1b) des Tunnels—vom stromaufwärts gelegenen Ende zum stromabwärts gelegenen Ende gesehen—Filtereinrichtungen (13) aufweist, welche ein Durchlaßhemmnis für Ultrahochfrequenzwellen bilden und bei der Luftaustrittsverhinderungseinrichtungen (14) vorgesehen sind, welche dazu geeignet sind, einen Durchlaß für die Waren zu ermöglichen, und wobei die Hauptluftzuführung (12) zwischen besagten Filtereinrichtungen und Luftaustrittsverhinderungseinrichtungen mündet.

15. Vorrichtung zum Trocknen nach einem der Ansprüche 11, 12, 13 oder 14, bei der jeder Generator (6, 11) für Ultrahochfrequenzwellen Einrichtungen (24, 25) aufweist, mittels derer eine gleichförmige Feldverteilung im Inneren der Tunelöffnung in den entsprechenden bestrahlten Zonen (Z₁ und Z₄) erreicht wird.

16. Vorrichtung zum Trocknen nach einem der Anspruch 11, 12, 13, 14 oder 15, dadurch gekennzeichnet, daß der Gegenstrom-Teilabschnitt sich über eine Länge erstreckt, welche zwischen 1,5 bis 5 Mal so groß ist wie diejenige des Gleichstrom-Teilabschnittes.

17. Vorrichtung zum Trocknen nach einem der Ansprüche 11, 12, 13, 14, 15 oder 16, dadurch gekennzeichnet, daß die Hauptluftzuführung (12) und die Sekundärluftzuführung in dem Tunnel angeordnet sind, welcher von einem wärmeisolierenden Material (20) umgeben ist, und daß jeder Ultrahochfrequenz-Wellengenerator jeweils in Form wenigstens eines Moduls aufgebaut ist, derart, daß ein Einsetzen in den Tunnel mit einer Strahlungsrichtung zu der Fördereinrichtung möglich ist.

18. Vorrichtung zum Trocknen nach Anspruch 17, welche wenigstens zwei übereinander angeordnete Tunnel aufweist, und bei der die Fördereinrichtung eine endlos ausgebildete Unterlage aufweist, die in jedem Tunnel angeordnet ist, und daß ein aufsteigend bzw. absteigend ausgebildetes Organ an dem Ende besagter Tunnel zum Transport der Waren von einem Tunnel in den anderen vorgesehen ist.

## Claims

1. Process for drying wet products, characterized in that it consists in subjecting the products successively to the following processing steps:

(a) exposing the products to a microwave electromagnetic radiation and at the same time ventilating them by means of a non-saturated hot gas stream,

(b) then ventilating said products by means of a non-saturated hot gas stream having a mean temperature which is lower than that of the stream of step (a),

(c) then ventilating said products by means of a non-saturated hot gas stream having a mean temperature which is higher than that of the stream of step (b) and has a moisture content which is lower than that of said stream,

(d) then exposing the products to a microwave electromagnetic radiation and at the same time ventilating them by means of a non-saturated hot gas stream having a mean temperature which is higher than that of the stream of step (a) and has a moisture content which is lower than that of said stream,

(e) then ventilating said products by means of a non-saturated hot gas stream having a mean temperature which is higher than that of the stream of step (d) and has a moisture content which is lower than that of said stream.

2. Drying process in accordance wtih Claim 1, characterized in that it consists in subjecting the products successively to the following processing steps:

(a) during a time interval within the range of 1 min to 10 min, exposing the products to a microwave electromagnetic radiation such that the mean power density at the level of the products is within the range of 0.2 to 5 watts/cm³ and at the same time ventilating said products by means of a hot gas stream having a temperature within the range of 90°C to 50°C and a moisture content within the range of 10% to 50%,

(b) during a period of time within the range of 1 min to 10 min, ventilating said products by means of a hot gas stream having a temperature within the range of 80°C to 40°C and a moisture content within the range of 15% to 60%.

(c) during a period of time within the range of 1.5 min to 15 min, ventilating said products by means of a hot gas stream having a temperature within the range of 40°C to 110°C and a moisture content within the range of 50% to 10%,

(d) during a period of time within the range of 1 min to 10 min, exposing the products to a microwave electromagnetic radiation such that the mean power density at the level of the products is within the range of 0.2 to 5 watts/cm$^3$ and at the same time ventilating said products by means of a hot gas stream having a temperature within the range of 80°C to 130°C and a moisture content within the range of 15% to 5%,

(e) during a period of time within the range of 2.5 min to 25 min, ventilating said products by means of a hot gas stream having a temperature within the range of 110°C to 150°C and a moisture content which is lower than 10%.

3. Drying process in accordance with one of Claims 1 or 2, characterized in that, after step (e), the products are subjected at least once to step (d') and (e') which are identical with steps (d) and (e).

4. Drying process in accordance with one of Claims 1, 2 or 3, characterized in that:—

during the successive steps (a) and (b), the products are displaced in cocurrent flow in a first ventilation gas stream presenting initial conditions corresponding to those of step (a), cocurrent displacement of the products being carried out in such a manner as to ensure that, after being charged with moisture and having lost heat, the first gas stream reverts to final conditions corresponding to those of step (b),

during the following steps (c), (d) and (e) and possibly (d'), (e'), the products are displaced in countercurrent flow in a second ventilation gas stream presenting initial conditions corresponding to those of the last step (e) or (e'), countercurrent displacement of the products being carried out in such a manner as to ensure that, after being charged with moisture and having lost heat, said second gas stream reverts to intermediate conditions corresponding to those of step (d) and to final conditions corresponding to those of step (c).

5. Drying process in accordance with Claim 4, characterized in that:—

the first ventilation stream is obtained by diverting a fraction of the second stream after it has passed over the products in countercurrent flow during steps (e) and (d) and possibly (e'), (d'), the ventilation carried out in step (c) being carried out in counter-current flow by means of the remaining fraction of said second stream whilst the ventilations of steps (a) and (b) are carried out in cocurrent flow by means of the diverted fraction of said second stream,

the remaining fraction of the second stream and the diverted fraction constituting the first stream are at least partly recycled and processed for the purpose of regenerating the second stream with its initial conditions corresponding to those of the last phase (e) or (e').

6. Drying process in accordance with one of Claims 4 or 5, characterized in that:—

the products are displaced continuously or sequentially within a tunnel (1) comprising from the upstream to the downstream end with respect to the direction of displacement of said products a product inlet (1a) a cocurrent section ($Z_1$, $Z_2$), a countercurrent section ($Z_3$, $Z_4$, $Z_5$, $Z'_4$, $Z'_5$) and a product outlet (1b),

the first ventilation stream is admitted into the tunnel (1) in the vicinity of its inlet (1a),

the second ventilation stream is admitted into the tunnel (1) in the vicinity of its outlet (1b),

said first stream and second stream are removed from the tunnel at an intermediate point (7) located between the cocurrent section and the countercurrent section.

7. Drying process in accordance with Claim 6, carried out within a tunnel (1) having a cavity of approximately constant cross-section, characterized in that:—

the second ventilation stream is produced so as to have during steps (e) and (d) a product-sweeping velocity V within the range of 3 to 15 m/s,

the diverted fraction is so adjusted that the first stream has, during steps (a) and (b), a sweeping velocity $v_1$ such that 1 m/s$\leqslant v_1 \leqslant$5 m/s, the remaining fraction being displaced during step (c) at a sweeping velocity $v_2$ which is substantially equal to V−$v_1$.

8. Drying process in accordance with one of Claims 6 or 7 in which the products are disposed in a monolayer on at least one endless belt (2), each belt having a rectilinear useful run (2a) which travels at an adjustable constant speed so as to transport the products between the inlet (1a) and the outlet (1b) of the tunnel.

9. Drying process in accordance with one of Claims 6 or 7 in which the products are transported between the inlet and the outlet of the tunnel by a pivoted-carrier conveyor (27) each pivoted carrier being constituted by a series of superposed plates (28), the products being placed on each plate in a monolayer.

10. Process in accordance with one of Claims 1, 2, 3, 4, 5, 6, 7, 8 or 9 for drying products constituted by mixtures having a base of clay for the purpose of obtaining products of ceramic material, characterized in that:—

step (a) is carried out under the following conditions: duration of the order of 2 min., mean power density of the order of 0.6 watt/cm$^3$; mean temperature of the gas stream of the order of 70°C and mean moisture content of said stream of the order of 40%,

step (b) is carried out under the following conditions: duration of the order of 2 min, mean temperature of the gas stream of the order of 60°C mean moisture content of said stream of the order of 45%,

step (c) is carried out under the following conditions: duration of the order of 3 min, mean temperature of the gas stream of the order of 80°C mean moisture content of said stream of the order of 40%,

step (d) (or possibly (d')) is carried out under the following conditions: duration of the order of 2 min, mean power density of the order of 0.6 watt/cm³, mean temperature of the gas stream of the order of 95°C and mean moisture content of said stream of the order of 10%,

step (e) (or possibly (e')) is carried out under the following conditions: duration of the order of 5 min, mean temperature of the gas stream of the order of 130°C and mean moisture content of said stream of the order of 5%.

11. Installation for drying wet products with a view to carrying out the process in accordance with one of the preceding claims, comprising a tunnel (1) delimiting an internal cavity for passing the products between an inlet (1a) and an outlet (1b), a conveyor (2, 27) adapted to transport the products along said tunnel from its inlet to its outlet and means for generating dry hot air (15), said drying installation being characterized in that it comprises:—

a hot-air blowing duct (12) or so-called main blowing duct which opens into the tunnel cavity in the vicinity of its outlet (1b),

a hot-air blowing duct (5) or so-called secondary blowing duct which opens into the tunnel cavity in the vicinity of its inlet (1a),

an air extraction duct (7) which opens into the cavity at an intermediate point of the length of this latter so as to divide this latter into a cocurrent upstream section and a countercurrent downstream section,

a first microwave generator (6) so arranged as to irradiate the cocurrent section along an upstream fraction of its length which is located in the vicinity of the inlet so as to delimit two successive zones along said cocurrent section: an irradiated and ventilated upstream zone ($Z_1$) in the vicinity of the inlet and a ventilated downstream zone ($Z_2$) in the vicinity of the extraction duct,

at least a second microwave generator (11) so arranged as to irradiate the countercurrent section along an intermediate fraction of its length so as to delimit at least three successive zones along said countercurrent section: a ventilated upstream zone ($Z_3$) in the vicinity of the extraction duct, at least one irradiated and ventilated intermediate zone ($Z_4$) and at least one ventilated downstream zone ($Z_5$).

12. Drying installation in accordance with Claim 11, characterized in that it comprises:—

a dry hot air generator (15) having an inlet (15b) connected to the extraction duct (7) and an outlet (15a) connected to the main blowing duct (12),

a bypass duct (9) which passes out of the countercurrent section and is connected to the secondary blowing duct (5), said bypass duct being equipped with a fan (10) for producing a circulation of air towards the secondary blowing duct.

13. Drying installation in accordance with Claim 12, characterized in that the bypass duct (9) passes out of the countercurrent section at a point located immediately upstream of the second microwave generator (11) between the zones ($Z_3$) and ($Z_4$).

14. Drying installation in accordance with one of Claims 11, 12 or 13, in which:—

the inlet (1a) of the tunnel is equipped from the upstream to the downstream end with air-stopping means (3) which are capable of permitting the passage of products and filtering means (4) forming a barrier to the passage of microwaves, the secondary blowing duct (5) being provided with an outlet between said stopping means and said filtering means,

the outlet (1b) of the tunnel is equipped from the upstream end to the downstream end with filtering means (13) forming a barrier to the passage of microwaves and air-stopping means (14) which are capable of permitting the passage of products, the main blowing duct (12) being provided with an outlet between said filtering means and said stopping means.

15. Drying installation in accordance with one of Claims 11, 12, 13 or 14, in which each· microwave generator (6, 11) is equipped with means (24, 25) for equalization of the field within the tunnel cavity in the corresponding irradiated zones ($Z_1$) and ($Z_4$).

16. Drying installation in accordance with one of Claims 11, 12, 13, 14 or 15, characterized in that the countercurrent section extends over a length which is 1.5 to 5 times greater than that of the cocurrent section.

17. Drying installation in accordance with one of Claims 11, 12, 13, 14, 15 or 16, characterized in that the main blowing duct (12) and secondary blowing duct (5) are inserted in the tunnel which is surrounded by heat-insulating material (20), each microwave generator being designed in the form of at least one module having a shape which is suitable for insertion into said tunnel in order to radiate towards the conveyor.

18. Drying installation in accordance with Claim 17, comprising at least two superposed tunnels, the conveyor being provided with an endless belt placed within each tunnel and an ascending or descending element located at the end of said tunnels in order to transfer the products from one tunnel to the other.

Fig. 1

A |     B |     C | D |     E |     F |

0 145 822

Fig. 2

0 145 822

**Fig. 3**

**Fig. 4**

Fig. 5

Fig.6

Fig. 7

Fig. 8

Fig. 9

Fig. 10

GL

Z" 5    Z" 4    Z' 5    Z' 4    26

Z1    Z2    Z3    Z4    Z5

0 145 822

Fig. 11

Fig. 12

27

28